# EUROPEAN PATENT APPLICATION

(11) **EP 3 176 747 A1**
(43) Date of publication of application: **07.06.2017**
(21) Application number: 15826381.4
(22) Date of filing: 30.07.2015
(51) Int. Cl.: G06Q 50/10, H04N 21/40, H04N 21/20

(54) **SYSTEM FOR CLOUD STREAMING-BASED BROADCAST-ASSOCIATED SERVICE, CLIENT APPARATUS FOR BROADCAST-ASSOCIATED SERVICE, TRIGGER CONTENT PROVISION SERVER AND METHOD UTILIZING SAME**

(30) Priority: 30.07.2014 KR 20140097652
(71) Applicant: Entrix Co., Ltd., Seoul 04551 (KR)
(72) Inventor: BAE, Tae-Meon, Seoul 138-916 (KR); NA, Hyun-Sik, Bucheon-si Gyeonggi-do 420-852 (KR); YUN, Hong-Seo, Incheon 400-833 (KR)
(74) Representative: Isarpatent
(86) International application number: PCT/KR2015/007999
(87) International publication number: WO 2016/018102

(57) **Abstract**

Disclosed are a system for a cloud streaming-based broadcast-associated service, a client apparatus for the broadcast-associated service, a trigger content provision server and a method utilizing same. The client apparatus for a broadcast-associated service receives trigger content and associated information for which a different screen for each user need not be provided from the trigger content provision server without going through a cloud streaming server, thereby allowing a large number of broadcast service clients to be serviced by a small number of trigger content provision servers, and the service via the cloud streaming server is received only when a user input for the trigger content exists, thereby allowing an associated service to be interactively provided with just the optimum resources.

## Description

### [Technical Field]

The present invention relates to a broadcast-linked service system based on cloud streaming and, more particularly, to a broadcast-linked service system based on cloud streaming of distributed server architecture, a broadcast-linked service client apparatus, a trigger content providing server, and a method using the same.

The present application claims priority to and benefits of Korean Patent Application No. 10-2014-0097652, filed on July 30, 2014, which is hereby incorporated by reference herein in its entirety.

### [Background Art]

With IT technology advanced, with an application market enlarged, and with a SNS market activated, data traffic such as user created contents is rapidly increasing. Further, this causes undesirable conditions beyond capacities of respective individual terminals. A cloud system can be an efficient solution to such conditions. Also, this cloud system may offer a basis for constructing an environment of very smaller devices.

For example, a certain service or function that requires a high-capacity image processing may be executed at a server based on cloud computing, and only a resultant screen of execution may be transmitted to a user terminal through streaming. This allows a user to use a service or function requiring a high performance or a high functionality through his or her terminal.

This technique to execute a specific service or function in response to a request from a user terminal and then offer an execution result to the user terminal through presentation virtualization is often referred to as a cloud streaming service.

Meanwhile, in broadcast systems based on a ground radio wave, a cable, or an IPTV, a broadcast-linked application and related information are delivered to clients such as a set-top box or a TV through a broadcast stream such as a MPEG-TS stream. The client that receives the broadcast stream extracts an application and metadata corresponding to related information from the broadcast stream and then invokes the application. This broadcast-linked application service exposes an application/service trigger, such as an image, on a broadcast screen so as to inform a user that there is an application or service associated with the content being broadcasted. Then the user may invoke a linked application by creating a predetermined input corresponding to the exposed application/service trigger. In this case, such a trigger image/video is also transmitted through the broadcast stream.

However, the above technique fails to offer broadcast-linked applications customized for respective broadcast receivers due to broadcasting of the stream, and also has difficulty in transmitting different kinds of meta-information associated with an application to respective broadcast receivers.

Accordingly, a new technique to overcome limitations of a transmission bandwidth for a broadcast stream and to provide different kinds of broadcast-linked services to respective users is needed.

A relevant technique is disclosed in Korean Patent Publication No. 10-2013-0110756 (Title: Method for providing enhanced broadcasting service) published on October 10, 2013

### [Disclosure]

### [Technical Problem]

An object of the present invention is to offer broadcast-linked applications customized for respective broadcast receivers and also to transmit different kinds of meta-information associated with an application to respective broadcast receivers.

Also, an object of the present invention is to allow a broadcast-linked service using an application or service content having a sufficient size regardless of a limitation in size of a broadcast stream such as an MPEG-TS stream.

Also, an object of the present invention is to solve the overload of a cloud streaming server in a user-specific broadcast-linked service based on cloud streaming.

### [Technical Solution]

In order to achieve the above objects, a broadcast-linked service client apparatus according to this invention comprises a communication unit which receives a service condition defined by a user-specific broadcast-linked defining server and receives trigger content corresponding to the service condition from a trigger content providing server; and a control unit which executes a trigger application to display the trigger content linked to broadcast content, receives a user-specific application execution result screen from a cloud streaming server, based on a user input corresponding to the trigger content, and offers the received screen to a user.

In this apparatus, the trigger content may be shared by greater numbers of users than users who share the application execution result screen.

In this apparatus, the service condition may include a broadcast type condition and a timing condition which are set depending on a user group.

In this apparatus, the trigger content may contain one or more of a cloud streaming application identifier and other trigger content identifier for providing the broadcast-linked service when the trigger content is selected.

In this apparatus, the trigger content may be transmitted at a transmission timing determined differently for each user in view of a load of the trigger content providing server.

In this apparatus, if there are two or more keys connected with the trigger content, the trigger content providing server may provide a cloud streaming application identifier or other trigger content identifier connected with each key together with the trigger content.

Additionally, a trigger content providing server according to an embodiment of this invention comprises a request receiving unit which receives, from a trigger application executed in a client, a request for trigger content required for a broadcast-linked service; a transmission timing determining unit which determines a transmission timing of the trigger content by considering one or more of an exposure time of the trigger content and a server load; and a trigger content transmitting unit which provides the trigger content to the client at the transmission timing such that the broadcast-linked service is performed through a cloud streaming service when there is a user input corresponding to the trigger content.

In this server, the transmission timing determining unit may determine differently the transmission timing for respective clients in view of the server load.

In this server, the transmission timing determining unit may determine the transmission timing such that the trigger content is transmitted before the exposure time.

In this server, the trigger content may be shared by greater numbers of users than users corresponding to the cloud streaming service.

Additionally, a broadcast-linked service method based on cloud streaming according to an embodiment of this invention comprises steps of receiving a service condition defined by a user-specific broadcast-linked defining server; receiving trigger content corresponding to the service condition from a trigger content providing server; displaying the trigger content linked to broadcast content; and receiving a user-specific application execution result screen from a cloud streaming server, based on a user input corresponding to the trigger content, and offering the received screen to a user.

In this method, the trigger content may be shared by greater numbers of users than users who share the application execution result screen.

In this method, the trigger content may be transmitted at a transmission timing determined differently for each user in view of a load of the trigger content providing server.

In this method, the step of receiving the trigger content may include, if there are two or more keys connected with the trigger content, receiving a cloud streaming application identifier or other trigger content identifier connected with each key together with the trigger content.

Also, a trigger content providing method according to an embodiment of this invention comprises steps of receiving, from a trigger application executed in a client, a request for trigger content required for a broadcast-linked service; determining a transmission timing of the trigger content by considering one or more of an exposure time of the trigger content and a server load; and providing the trigger content to the client at the transmission timing such that the broadcast-linked service is performed through a cloud streaming service when there is a user input corresponding to the trigger content.

In this method, the step of determining the transmission timing may include determining differently the transmission timing for respective clients in view of the server load.

In this method, the step of determining the transmission timing may include determining the transmission timing such that the trigger content is transmitted before the exposure time.

Additionally, a broadcast-linked service system based on cloud streaming according to an embodiment of this invention comprise a user-specific broadcast-linked service defining server which provides a service condition for a broadcast-linked service; a trigger content providing server which provides trigger content corresponding to the service condition; a client apparatus which executes a trigger application to display the trigger content linked to broadcast content, receives a user-specific application execution result screen created based on a user input corresponding to the trigger content, and offers the received screen to a user; and a cloud streaming server which creates the execution result screen by executing a user-specific application based on the user input.

### [Advantageous Effects]

According to this invention, an effective broadcast-linked service is possible by providing the broadcast-linked service through cloud streaming and also by allowing the cloud streaming server to take charge of smaller numbers of users than service-exposed broadcast receivers through the trigger content providing service.

Additionally, this invention may define different broadcast-linked services for respective users through the user-specific broadcast-linked service defining server, thus providing information about different broadcast-linked services to respective users.

### [Description of Drawings]

FIG. 1 is a block diagram illustrating a broadcast-linked service system based on cloud streaming according to an embodiment of the present invention.
FIG. 2 is a block diagram illustrating an example of a client apparatus shown in FIG. 1.
FIG. 3 is a block diagram illustrating an example of a trigger content providing server shown in FIG. 1.
FIG. 4 is a flow diagram illustrating a broadcast-linked service method based on cloud streaming according to an embodiment of the present invention.
FIG. 5 is a flow diagram illustrating a trigger content providing method according to an embodiment of the present invention.
FIG. 6 is a flow diagram wholly illustrating a broadcast-linked service method based on cloud streaming according to an embodiment of the present invention.

### [Mode for Invention]

Hereinafter, preferred embodiments of this invention will be described with reference to the accompanying drawings. However, in the following description and accompanying drawings, well known functions or elements may not be described or illustrated in detail to avoid obscuring the subject matter of this invention. Through the drawings, the same reference numerals denote corresponding elements if possible.

The terms and words used in the following description and claims are not limited to the bibliographical meanings and are merely used by the inventor to enable a clear and consistent understanding of the invention. Accordingly, it should be apparent to those skilled in the art that the following description of exemplary embodiments of this invention is provided for illustration purpose only and not for the purpose of limiting the invention as defined by the appended claims and their equivalents. Additionally, the expressions "first", "second", etc. used for specifying various elements are used for distinguishing one element from other elements and do not limit the corresponding elements.

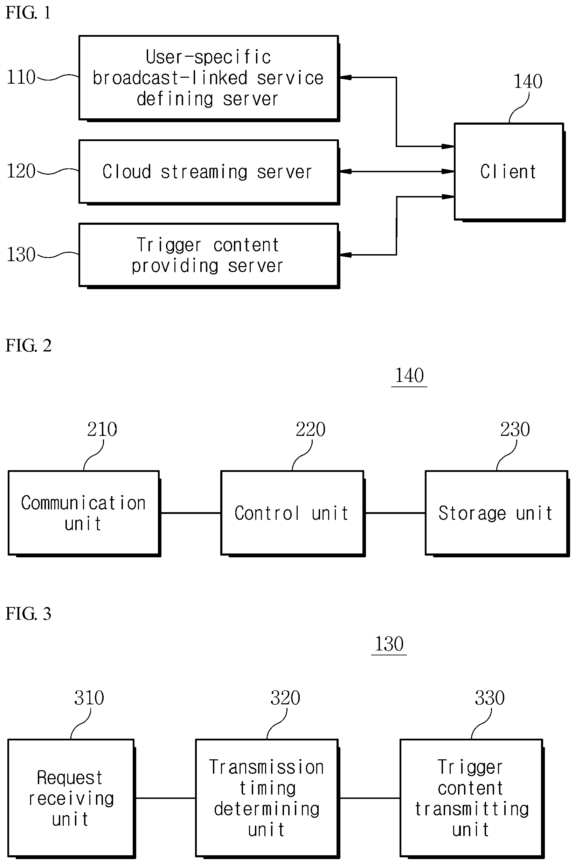

FIG. 1 is a block diagram illustrating a broadcast-linked service system based on cloud streaming according to an embodiment of the present invention.

Referring to FIG. 1, the broadcast-linked service system based on cloud streaming according to an embodiment of this invention may include a user-specific broadcast-linked service defining server 110, a cloud streaming server 120, a trigger content providing server 130, and a client apparatus 140.

The user-specific broadcast-linked service defining server 110 provides a service condition for a broadcast-linked service.

The service condition may include a broadcast type condition and a timing condition which are set depending on a user group.

The trigger content providing server 130 provides trigger content which corresponds to the service condition.

The trigger content may contain one or more of a cloud streaming application identifier and any other trigger content identifier for providing the broadcast-linked service when the trigger content is selected.

Namely, the trigger content may be information for informing, during a broadcast, a user that the broadcast-linked service associated with the content of the broadcast can be provided. The trigger content may be provided in the form of an image or a video.

The trigger content may be transmitted at a transmission timing determined differently for each user in view of the load of the trigger content providing server.

The client apparatus 140 executes a trigger application and then displays the trigger content linked to the broadcast content. Also, the client apparatus 140 receives a user-specific application execution result screen, i.e., customized for the user, created on the basis of a user input corresponding to the trigger content.

The client apparatus 140 may be a set-top box, a digital TV, or the like.

The cloud streaming server 120 executes a user-specific application, based on the user input, and thereby creates the execution result screen.

Namely, in order to solve the overload of the cloud steaming server in the broadcast-linked service based on cloud streaming, this invention enables the trigger content providing server 130 to provide trigger content, which needs not offer different screens to respective users, and related information to the client apparatus 140 without passing through the cloud streaming server 120. This allows a service to be provided to great numbers of broadcast receivers through smaller numbers of trigger content providing servers 130. Further, only when the user selects a key connected with the trigger content, the cloud streaming server 120 operates and then provides an interactive linked service to the user. This promotes an operating efficiency of the server.

The trigger content providing server 130 may provide a trigger image or video, and also provide, together with trigger content, an identifier of a cloud streaming application, or any other trigger content identifier, for performing a related service in response to a selection of the trigger content.

FIG. 2 is a block diagram illustrating an example of a client apparatus shown in FIG. 1.

Referring to FIG. 2, the client apparatus shown in FIG. 1 includes a communication unit 210, a control unit 220, and a storage unit 230.

The communication unit 210 receives data from the user-specific broadcast-linked service defining server 110, the cloud streaming server 120 and the trigger content providing server 130 through a communication network, and transmits a control signal to the user-specific broadcast-linked service defining server 110, the cloud streaming server 120 and the trigger content providing server 130. The communication unit 210 may transmit and receive data through a wired manner, a wireless manner, and various communication manners. In addition, the communication unit 210 may transmit and receive data by using one or more communication manners. For this, the communication unit 210 may include a plurality of communication modules that transmit and receive data in accordance with different communication manners.

Particularly, the communication unit 210 receives a service condition defined by the user-specific broadcast-linked defining server 110 and also receives trigger content corresponding to the service condition from the trigger content providing server 130.

The service condition may include a broadcast type condition and a timing condition which are set depending on a user group.

The trigger content may contain one or more of a cloud streaming application identifier and any other trigger content identifier for providing the broadcast-linked service when the trigger content is selected.

The trigger content may be transmitted at a transmission timing determined differently for each user in view of the load of the trigger content providing server 130.

Namely, if a broadcast-linked service, a related broadcast and a triggering timing, selected depending on a user group, are provided to the client apparatus 140 through the user-specific broadcast-linked service defining server 110, the client apparatus 140 such as a set-top box or a TV requests trigger content and related information from the trigger content providing server 130 when a user selects a specific channel (or a specific VOD service) at a specific time. The trigger content related information may correspond to a unique identifier. The trigger application of the client apparatus 140 receives the requested specific trigger content and related information from the trigger content providing server 130 and displays them on the screen. The trigger application can request information at any timing before display on the screen, and a receiving timing can be determined differently depending on respective broadcast receivers. This allows load balancing of the trigger content providing server 130.

The control unit 220 performs a general control operation of the client apparatus. Particularly, the control unit 220 executes a trigger application and then displays the trigger content linked to the broadcast content. Also, the control unit 220 receives a user-specific application execution result screen from the cloud streaming server, based on a user input corresponding to the trigger content.

The trigger content may be shared by greater numbers of users than users who share the application execution result screen. Namely, the trigger content is provided by a separate trigger content providing server since there is no need to differently offer the trigger content to each user. Also, the cloud streaming server operates only when the user requests a service with regard to the trigger content.

If the trigger content displayed through the client apparatus 140 is selected by the user, the cloud streaming service is immediately accessed. At this time, the cloud streaming application identifier for the cloud streaming service may be transmitted together with the trigger content from the trigger content providing server 130.

If the trigger content displayed through the client apparatus 140 is selected by the user, and if there are two or more keys connected with the trigger content, the cloud streaming application identifier or other trigger content identifier connected with each key may be provided by the trigger content providing server 130.

Through this manner, all broadcast receivers to which the trigger content is exposed may receive a service through the trigger content providing server 130 without accessing the cloud streaming server 120. This may effectively reduce the load of the cloud streaming server 120.

The storage unit 230 may store information required for the operation of the client apparatus. The storage unit 230 may include magnetic media such as a hard disk, a floppy disk and a magnetic tape, optical media such as a compact disk read only memory (CD-ROM) and a digital video disk (DVD), magneto-optical media such as a floptical disk, a ROM, a random access memory (RAM), and a flash memory.

FIG. 3 is a block diagram illustrating an example of a trigger content providing server shown in FIG. 1.

Referring to FIG. 3, the trigger content providing server shown in FIG. 1 includes a request receiving unit 310, a transmission timing determining unit 320, and a trigger content transmitting unit 330.

The request receiving unit 310 receives, from a trigger application executed in the client apparatus, a request for trigger content required for a broadcast-linked service.

The transmission timing determining unit 320 determines a transmission timing of the trigger content by considering one or more of an exposure time of the trigger content and a server load.

The transmission timing determining unit 320 may determine differently the transmission timing for respective clients in view of the server load.

The transmission timing determining unit 320 may determine the transmission timing such that the trigger content is transmitted before the exposure time.

The trigger content transmitting unit 330 provides the trigger content to the client apparatus at the transmission timing such that the broadcast-linked service is performed through the cloud streaming service when there is a user input corresponding to the trigger content.

In this case, the trigger content may be shared by greater numbers of users than users corresponding to the cloud streaming service.

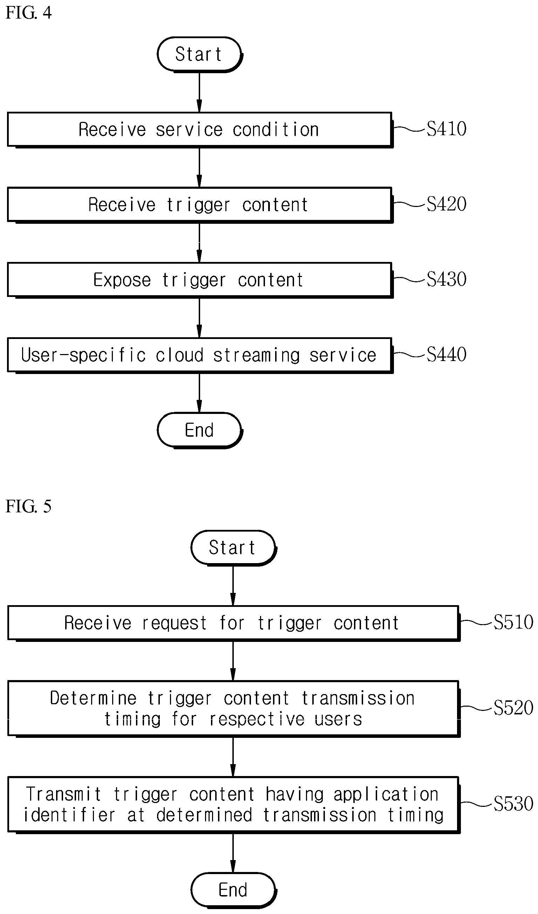

FIG. 4 is a flow diagram illustrating a broadcast-linked service method based on cloud streaming according to an embodiment of the present invention.

Referring to FIG. 4, the broadcast-linked service method based on cloud streaming according to an embodiment of this invention receives a service condition defined by the user-specific broadcast-linked service defining server (S410).

Additionally, the broadcast-linked service method based on cloud streaming according to an embodiment of this invention receives, from the trigger content providing server, trigger content corresponding to the service condition (S420).

At this step, the trigger content may be shared by greater numbers of users than users who share the application execution result screen.

At this step, the trigger content may be transmitted at a transmission timing determined differently for each user in view of the load of the trigger content providing server.

If there are two or more keys connected with the trigger content, the step S420 may receive, together with the trigger content, the cloud streaming application identifier or other trigger content identifier connected with each key.

Additionally, the broadcast-linked service method based on cloud streaming according to an embodiment of this invention displays the trigger content linked to broadcast content (S430).

Additionally, the broadcast-linked service method based on cloud streaming according to an embodiment of this invention receives a user-specific application execution result screen from the cloud streaming server, based on a user input corresponding to the trigger content, and then offers the received screen to the user (S440).

FIG. 5 is a flow diagram illustrating a trigger content providing method according to an embodiment of the present invention.

Referring to FIG. 5, the trigger content providing method according to an embodiment of this invention receives, from a trigger application executed at a client, a request for trigger content required for a broadcast-linked service (S510).

Also, the trigger content providing method according to an embodiment of this invention determines a transmission timing of the trigger content by considering one or more of an exposure time of the trigger content and a server load (S520).

The step S520 may determine differently the transmission timing for respective clients in view of the server load.

The step S520 may determine the transmission timing such that the trigger content is transmitted before the exposure time.

Also, the trigger content providing method according to an embodiment of this invention provides the trigger content to the client at the transmission timing such that the broadcast-linked service is performed through a cloud streaming service when there is a user input corresponding to the trigger content (S530).

The step S530 may provide, together with the trigger content, a cloud streaming application identifier or other trigger content identifier for offering the broadcast-linked service.

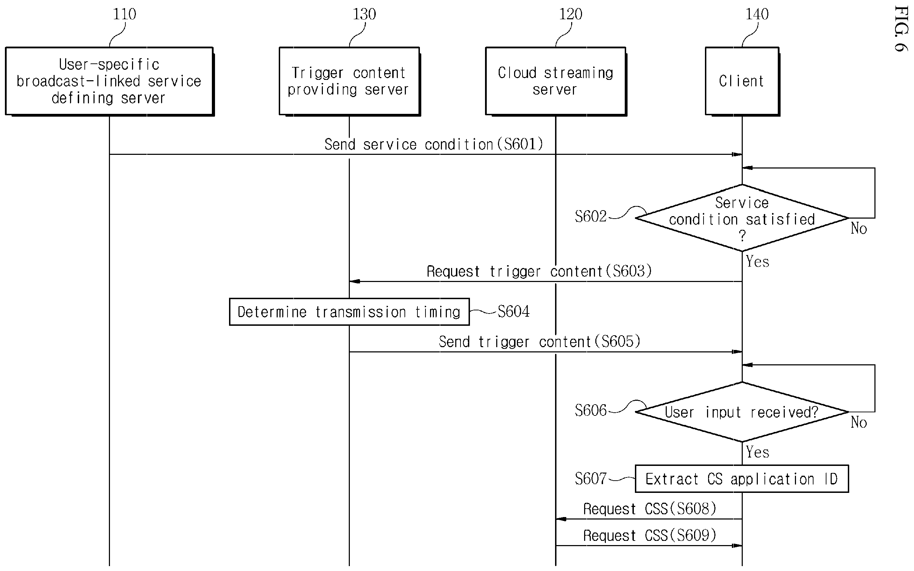

FIG. 6 is a flow diagram wholly illustrating a broadcast-linked service method based on cloud streaming according to an embodiment of the present invention.

Referring to FIG. 6, in the broadcast-linked service method based on cloud streaming according to an embodiment of this invention, the user-specific broadcast-linked service defining server 110 transmits a service condition (S601).

At this step, the service condition may include a broadcast type condition and a timing condition which are set depending on a user group.

The client apparatus 140 determines whether the received service condition is satisfied (S602).

If it is determined that the service condition is satisfied, the client apparatus 140 sends a request for trigger content to the trigger content providing server 130 (S603).

Namely, when a user selects a channel, a VOD, etc. corresponding to the service condition at a predetermined timing, the client apparatus 140 requests the trigger content.

The trigger content providing server 130 determines a transmission timing of the trigger content by considering one or more of an exposure time of trigger content and a server load (S604).

The trigger content providing server 130 provides the trigger content to the client apparatus 140 at the transmission timing (S605).

The client apparatus 140 displays the received trigger content together with broadcast content on a screen, and then determines whether an input for the trigger content is received from a user (S606).

If any input for the trigger content is received from the user, the client apparatus 140 creates a cloud streaming application identifier (S607).

At this step, the cloud streaming application identifier may be provided by the trigger content providing server 130. Also, the client apparatus 140 may create this identifier by extracting it from the trigger content.

The client apparatus 140 requests a cloud streaming service from the cloud streaming server 120 by referring to the cloud streaming application identifier (S608).

The cloud streaming server 120 executes a cloud streaming application corresponding to a broadcast-linked service by referring to the cloud streaming application identifier and then provides an execution result screen to the client apparatus 140 (S609).

The respective steps shown in FIGS. 4, 5 and 6 may be performed in the illustrated order, or in the reverse order, or simultaneously.

The broadcast-linked service method based on cloud streaming and the trigger content providing method according to the present invention may be implemented by a program or smart phone application which may be executed through various computer means. Such a program or smart phone application may be recorded on a non-transitory computer-readable recording medium, which may include a program command, a data file, a data structure, etc. alone or in combination. The program command recorded on the medium is designed or configured especially for the invention, or known to those skilled in computer software. The non-transitory computer-readable recording medium includes magnetic media such as a hard disk, a floppy disk, and a magnetic tape, optical media such as a CD-ROM and a DVD, magneto-optical media such as a floptical disk, and hardware devices specially configured to store and perform a program command, such as a ROM, a RAM, a flash memory and the like. In addition, the program command may include high-class language codes, which can be executed in a computer by using an interpreter, as well as machine codes made by a compiler. This hardware device may be configured to operate as one or more software modules in order to perform the operation of this invention, and vice versa.

According to this invention, the broadcast-linked service system based on cloud streaming, the broadcast-linked service client apparatus, the trigger content providing server, and the method using the same are not limited to the above-discussed embodiments, all or parts of which may be selectively combined to make various modifications.

### [Industrial Applicability]

According to this invention, it is possible to provide an effective broadcast-linked service by offering a broadcast-linked service through cloud streaming and also by allowing a cloud streaming server to take charge of smaller numbers of users than service-exposed broadcast receivers through a trigger content providing service. Further, this invention can contribute to the vitalization of a broadcast-linked service by realizing a personalized broadcast-linked service while minimizing a load of a cloud streaming server through a server-distributed structure.

## Claims

1. A broadcast-linked service client apparatus comprising:
a communication unit which receives a service condition defined by a user-specific broadcast-linked defining server and receives trigger content corresponding to the service condition from a trigger content providing server; and
a control unit which executes a trigger application to display the trigger content linked to broadcast content, receives a user-specific application execution result screen from a cloud streaming server, based on a user input corresponding to the trigger content, and offers the received screen to a user.

2. The broadcast-linked service client apparatus of claim 1, wherein the trigger content is shared by greater numbers of users than users who share the application execution result screen.

3. The broadcast-linked service client apparatus of claim 2, wherein the service condition includes a broadcast type condition and a timing condition which are set depending on a user group.

4. The broadcast-linked service client apparatus of claim 2, wherein the trigger content contains one or more of a cloud streaming application identifier and other trigger content identifier for providing the broadcast-linked service when the trigger content is selected.

5. The broadcast-linked service client apparatus of claim 2, wherein the trigger content is transmitted at a transmission timing determined differently for each user in view of a load of the trigger content providing server.

6. The broadcast-linked service client apparatus of claim 2, wherein if there are two or more keys connected with the trigger content, the trigger content providing server provides a cloud streaming application identifier or other trigger content identifier connected with each key together with the trigger content.

7. A trigger content providing server comprising:
a request receiving unit which receives, from a trigger application executed in a client, a request for trigger content required for a broadcast-linked service;
a transmission timing determining unit which determines a transmission timing of the trigger content by considering one or more of an exposure time of the trigger content and a server load; and
a trigger content transmitting unit which provides the trigger content to the client at the transmission timing such that the broadcast-linked service is performed through a cloud streaming service when there is a user input corresponding to the trigger content.

8. The trigger content providing server of claim 7, wherein the transmission timing determining unit determines differently the transmission timing for respective clients in view of the server load.

9. The trigger content providing server of claim 8, wherein the transmission timing determining unit determines the transmission timing such that the trigger content is transmitted before the exposure time.

10. The trigger content providing server of claim 9, wherein the trigger content is shared by greater numbers of users than users corresponding to the cloud streaming service.

11. A broadcast-linked service method based on cloud streaming, the method comprising steps of:
receiving a service condition defined by a user-specific broadcast-linked defining server;
receiving trigger content corresponding to the service condition from a trigger content providing server;
displaying the trigger content linked to broadcast content; and
receiving a user-specific application execution result screen from a cloud streaming server, based on a user input corresponding to the trigger content, and offering the received screen to a user.

12. The broadcast-linked service method of claim 11, wherein the trigger content is shared by greater numbers of users than users who share the application execution result screen.

13. The broadcast-linked service method of claim 12, wherein the trigger content is transmitted at a transmission timing determined differently for each user in view of a load of the trigger content providing server.

14. The broadcast-linked service method of claim 12, wherein the step of receiving the trigger content includes, if there are two or more keys connected with the trigger content, receiving a cloud streaming application identifier or other trigger content identifier connected with each key together with the trigger content.

15. A trigger content providing method comprising steps of:
receiving, from a trigger application executed in a client, a request for trigger content required for a broadcast-linked service;
determining a transmission timing of the trigger content by considering one or more of an exposure time of the trigger content and a server load; and
providing the trigger content to the client at the transmission timing such that the broadcast-linked service is performed through a cloud streaming service when there is a user input corresponding to the trigger content.

16. The trigger content providing method of claim 15, wherein the step of determining the transmission timing includes determining differently the transmission timing for respective clients in view of the server load.

17. The trigger content providing method of claim 15, wherein the step of determining the transmission timing includes determining the transmission timing such that the trigger content is transmitted before the exposure time.

18. A computer-readable medium recording thereon a program executing the method of one of claims 11 to 17.

19. A broadcast-linked service system based on cloud streaming, the system comprising:
a user-specific broadcast-linked service defining server which provides a service condition for a broadcast-linked service;
a trigger content providing server which provides trigger content corresponding to the service condition;
a client apparatus which executes a trigger application to display the trigger content linked to broadcast content, receives a user-specific application execution result screen created based on a user input corresponding to the trigger content, and offers the received screen to a user; and
a cloud streaming server which creates the execution result screen by executing a user-specific application based on the user input.
